# EUROPEAN PATENT SPECIFICATION

(11) **EP 3 772 833 B1**
(45) Date of publication and mention of the grant of the patent: **03.05.2023**
(21) Application number: 20188716.3
(22) Date of filing: 30.07.2020
(51) Int. Cl.: H04L 41/147, H04L 41/0631, H04L 41/16, H04L 41/40

(54) **A METHOD OF IDENTIFYING AND CLASSIFYING THE BEHAVIOR MODES OF A PLURALITY OF DATA RELATIVE TO A TELEPHONY INFRASTRUCTURE FOR NETWORK FUNCTION VIRTUALIZATION**
VERFAHREN ZUR IDENTIFIZIERUNG UND KLASSIFIZIERUNG DER VERHALTENSMODI EINER VIELZAHL VON DATEN IN BEZUG AUF EINE TELEFONIE-INFRASTRUKTUR ZUR VIRTUALISIERUNG VON NETZWERKFUNKTIONEN
PROCÉDÉ D'IDENTIFICATION ET DE CLASSIFICATION DES MODES DE COMPORTEMENT D'UNE PLURALITÉ DE DONNÉES D'UNE PLURALITÉ DE DONNÉES PAR RAPPORT À UNE INFRASTRUCTURE DE TÉLÉPHONIE POUR LA VIRTUALISATION DE FONCTIONS DE RÉSEAU

(30) Priority: 07.08.2019 IT 201900014241
(43) Date of publication of application: 10.02.2021
(73) Proprietor: Vodafone Italia S.p.A., 10015 Ivrea (TO) (IT)
(72) Inventor: Cucinotta, Tommaso, 56127 Pisa PI (IT); Vannucci, Marco, 56127 Pisa PI (IT); Ritacco, Antonio, 56127 Pisa PI (IT); Lanciano, Giacomo, 56127 Pisa PI (IT); Artale, Antonino, 10015 Ivrea TO (IT); Barata, Joao, 10015 Ivrea TO (IT); Sposato, Enrica, 10015 Ivrea TO (IT)
(74) Representative: Perani & Partners S.p.A.

(56) References cited:
- WO-A1-2018/203780
- US-A1- 2006 161 814
- US-A1- 2018 246 746
- ZHIJING LI ET AL: "Predictive Analysis in Network Function Virtualization", 20181031; 20181031 - 20181102, 31 October 2018 (2018-10-31), pages 161-167, XP058421789, DOI: 10.1145/3278532.3278547 ISBN: 978-1-4503-5619-0
- "Experiential Networked Intelligence (ENI); ENI use cases", ETSI DRAFT SPECIFICATION; ENI 001, EUROPEAN TELECOMMUNICATIONS STANDARDS INSTITUTE (ETSI), 650, ROUTE DES LUCIOLES ; F-06921 SOPHIA-ANTIPOLIS ; FRANCE , vol. ISG ENI Experiential Networked Intelligence, no. V2.0.10 11 July 2019 (2019-07-11), pages 1-89, XP014346846, Retrieved from the Internet: URL:docbox.etsi.org/ISG/ENI/70-Draft/008/E NI-008v2010/ENI-008v2010_rev_marks.docx [retrieved on 2019-07-11]

## Description

### Technical field

The present invention relates to a method of identifying and classifying the behavior modes of a plurality of data relative to a telephony infrastructure for Network Function Virtualization. This method is particularly used in connection with the management operations of telephony infrastructure.

### Background art

Infrastructures for Network Function Virtualization (NFV infrastructures) are known in the literature. In particular, the term Network Function Virtualization refers to an architectural approach which leverages information technologies to virtualize network services. That is, the term Network Function Virtualization refers to a network approach which allows to replace hardware devices such as routers and firewalls with network applications which are software-based and function as virtual machines on standard servers. The term Network Function Virtualization also refers to lightweight virtualization methods such as those at the operating level, also called container systems.

In more detail, through the NFV infrastructure, network features become software applications called virtual network functions (VNFs) which can be instantiated on a server. That is, the VNFs are implemented within the NFV infrastructure in the form of software which runs within different virtual machines.

NFV infrastructure management operations such as analysis, prediction and planning are also known. Such operations are of the utmost importance in order to allow the optimal functioning of the infrastructure, avoiding malfunctions of the infrastructure causing errors in the transmission of information. For example, the creation of specific algorithms to detect any anomalies in the NFV infrastructure falls within this perspective.

Examples of NFV infrastructure management methods are shown in the documents "ZHIJING LI ET AL: Predictive Analysis in Network Function Virtualization" and "WO 2018/203780 A1". Document US 2018/246746 A1 discloses methods and systems for efficient management of computing resources that support Virtual Network Functions (VNFs). Document "Experimental Networked Intelligence (ENI); ENI use cases" (ETSI DRAFT SPECIFICATION; ENI 001, EUROPEAN TELECOMMUNICATIONS STANDARDS INSTITUTE (ETSI), 650, ROUTE DES LUCIOLES; F-06921 SOPHIA-ANTIPOLIS; FRANCE) provides guide lines for using machine learning technique for the automation of network infrastructure management operations for an operator. Document US 2006/161814 A1 discloses a method of computer data analysis using neural networks.

### Problems of the background art

The algorithms developed by NFV infrastructure operators are often affected by programming errors. These errors have an impact on infrastructure management operations. That is, failure to detect an infrastructure anomaly or inaccurate detection may compromise the proper functioning of the infrastructure and therefore the correct transmission of information. Consequently, the algorithms of the background art do not permit reliable management of the infrastructure.

### Summary of the invention

In this context, the technical task underlying the present invention is to provide a method of identifying and classifying the behavior modes of a plurality of data relative to a telephony infrastructure for Network Function Virtualization which overcomes the drawbacks of the background art.

In particular, an object of the present invention is to propose a method which allows to effectively identify any anomalies in a telephony infrastructure for Network Function Virtualization.

A further object of the present invention is to propose a method which allows to identify any anomalies in the infrastructure more efficiently.

The mentioned technical task and the specified objects are substantially achieved by a method of identifying and classifying the behavior modes of a plurality of data relative to a telephony infrastructure for Network Function Virtualization comprising the technical specifications set out in one or more of the appended claims.

### Advantages of the invention

Thanks to an embodiment of the invention it is possible to effectively identify the behavior modes of an NFV infrastructure. Consequently, from the analysis of the behavior modes of the NFV infrastructure it is possible to reliably identify any anomalies in the infrastructure.

Thanks to the preferred embodiment of the invention it is also possible to compare the behavior modes of the NFV infrastructure by assessing the impact of external factors on the behavior of the infrastructure.

### BRIEF DESCRIPTION OF THE DRAWINGS

Further characteristics and advantages of the present invention will become more apparent from the exemplary, and therefore non-limiting, description of a preferred but not exclusive embodiment of a method of identifying and classifying the behavior modes of a plurality of data relative to a telephony infrastructure for Network Function Virtualization, as illustrated in the appended drawings, in which:

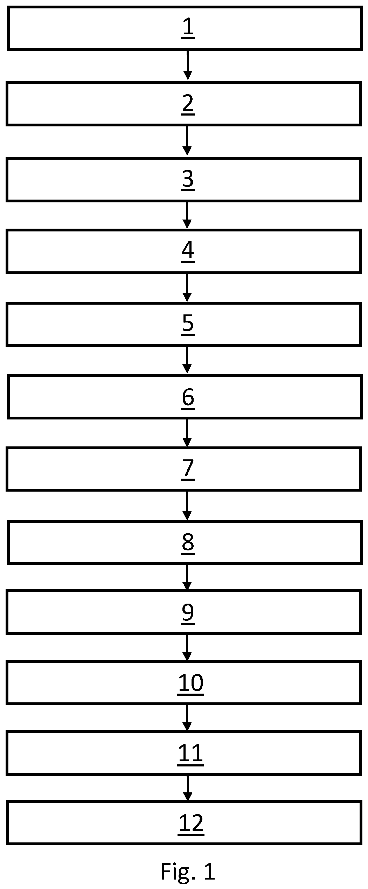

- Figure 1 is a schematic representation of the order of the main steps of the method.

### DETAILED DESCRIPTION

The present invention relates to a method of identifying and classifying the behavior modes of a plurality of data relative to a telephony infrastructure for Network Function Virtualization.

This method comprises the step of providing 1 a first database containing historical telephony infrastructure monitoring data concerning the level of use of telephony infrastructure resources. Historical telephony infrastructure monitoring data comprise, for example, the level of use of the processor, disk, network, and memory. These historical telephony infrastructure monitoring data are relative to a predetermined time horizon. Preferably, the historical telephony infrastructure monitoring data is numerical data.

The method further comprises the step of providing 2 a second database containing historical telephony infrastructure application monitoring data concerning the level of use of the telephony infrastructure application. Historical telephony infrastructure application monitoring data comprise, for example, data measuring the number of registered users, the number of sessions, the number of requests received, the number and type of errors encountered. These historical telephony infrastructure application monitoring data are relative to the same predetermined time horizon as the historical telephony infrastructure monitoring data. Preferably, the historical telephony infrastructure application monitoring data is numerical data.

In addition, the method comprises the step of providing 3 a control unit in signal communication with the first and second databases.

The method also comprises the step of providing 4 a neural network of Self-Organizing Map type. This neural network comprises a plurality of neurons. The neural network of Self-Organizing Map type is known to the person skilled in the art and will not be described in detail herein for this reason.

Next, the method comprises the step of extrapolating 5 by the control unit at least one first subset of historical data from the historical telephony infrastructure monitoring data. This first subset of data is relative to a predetermined time window. Preferably, the predetermined time window corresponds to one day of the predetermined time horizon. Still preferably, this first subset of historical data is relative to an entity of the telephony infrastructure.

The method comprises the step of extrapolating 6 by the control unit at least one second subset of historical data from the historical application monitoring data. This second subset of data is relative to the predetermined time window. Preferably, this second subset of historical data is relative to the same entity of the telephony infrastructure and to the same day of the predetermined time horizon as the first subset of historical data.

The method comprises the step of defining 7 by the control unit at least one historical input vector comprising the historical data of the first and second subsets of historical data. Preferably, this input vector is relative to an infrastructure entity and to the predetermined time window.

Subsequently, the method comprises the step of training 8 the neural network by the control unit to define a weight vector comprising a plurality of weight coefficients for each neuron of the neural network such that by providing the at least one historical input vector as an input to the neural network, the behavior mode of the historical data of the at least one historical input vector is obtained as an output. Each weight vector represents a respective behavior mode. Preferably, the neural network training is of the unsupervised type.

After the step of training 8 the neural network, the method comprises the step of acquiring 9 by the control unit a plurality of current telephony infrastructure monitoring data and current telephony infrastructure application monitoring data. This current data are acquired in real time and are relative to a current window. Preferably, such current data are relative to an entity of the telephony infrastructure and the current window corresponds to a time period of one day. Still preferably, the current telephony infrastructure monitoring data and current telephony infrastructure application monitoring data are numerical.

The method comprises the step of defining 10 by the control unit at least one current input vector comprising the current acquired data. Preferably, the current input vector is relative to an entity of the telephony infrastructure. It should be noted that the current input vector is defined similarly to the historical input vector.

Next, the method comprises the step of providing 11 by the control unit the at least one current input vector at the input of the trained neural network to obtain at the output the neuron of the neural network that is most stimulated by the current input vector. That is, the coordinate in the Euclidean plane of the weight vector associated with the neuron that is most stimulated by the current input vector is obtained at the output.

The method comprises the step of analyzing 12 the weight vector associated with the neuron obtained in the previous step to define the behavior mode of the current data of the current input vector. In fact, each weight vector is relative to a respective behavior mode. By analyzing the weight vector associated with the neuron that is most stimulated by the current input vector, it is possible to trace the behavior mode of the current data of the current input vector. That is, it is possible to trace the behavior mode of the entity of the telephony infrastructure to which the current input vector is relative. From the analysis of the behavior mode of the entity of the telephony infrastructure, it is possible to trace any anomalies of this entity of the telephony infrastructure.

In accordance with a preferred embodiment of the invention, the method comprises the step of extracting a plurality of first historical data subsets and a plurality of second historical data subsets from the first and second databases, respectively. Each of the first and second subsets of historical data is relative to a respective entity of the telephony infrastructure and to a respective predetermined time window. Preferably, each predetermined time window corresponds to a given day of the predetermined time horizon.

The method comprises the step of defining a plurality of historical input vectors. Each historical input vector comprises at least one first and one second subset of historical data relative to a respective entity and to a respective day of the predetermined time horizon.

Next, the method comprises the step of training by the control unit the neural network to define a weight vector comprising a plurality of weight coefficients for each neuron of the neural network such that providing at the input of the neural network the plurality of historical input vectors the behavior mode of the historical data of the plurality of historical input vectors is obtained at the output.

In accordance with the preferred embodiment of the invention, the method comprises the step of defining a plurality of current input vectors from a plurality of current data. Each current input vector is relative to a given entity of the telephony infrastructure and to a given day.

The method comprises the step of providing the plurality of current input vectors as an input to the neural network to obtain the behavior modes of the current data of each current input vector. Advantageously, the method allows to simultaneously analyze and define the behavior modes of a plurality of entities of the telephony infrastructure.

In accordance with the preferred embodiment of the invention, the method comprises the further step of defining a first threshold of distance in the Euclidean plane.

In addition, the method comprises the further step of calculating a plurality of first distances in the Euclidean plane for each weight vector identified in the previous steps. Each first distance represents the distance in the Euclidean plane between each weight vector and a different weight vector among those identified in the previous steps. That is, the method comprises the step of calculating for each weight vector a number of distances in the Euclidean plane equal to the number of neurons in the neural network.

The method comprises the step of grouping all the weight vectors whose mutual distance is equal to or smaller than the value of the first threshold of distance in the Euclidean plane into a respective group of neurons having a respective common behavior mode. In other words, the method comprises the step of grouping all the weight vectors whose mutual distance from each other is equal to or smaller than the value of the first threshold of distance in the Euclidean plane into a respective common behavior mode.

The grouping of the neurons prevents different behavior modes from being output from the neural network by providing subsets of current data which are not significantly different from each other. In fact, even if for subsets of current data provided as an input to the neural network, such neural network provides different neurons as an output, these neurons may correspond to behavior modes which are not significantly distinct or distinguishable. In other words, the grouping of neurons ensures that by providing subsets of current data which are not significantly different from each other as input to the neural network, the behavior mode obtained as output from the neural network is the same for such subsets of current data. The grouping of neurons thus makes it possible to simplify the procedure of analyzing and displaying the behavior modes of the current data, avoiding that the neural network detects insignificant differences between the behavior modes of the subsets of current data provided as input to the neural network.

In accordance with the preferred embodiment of the invention, the method comprises the further step of defining a second threshold of distance in the Euclidean plane. Preferably, the value of the second threshold of distance in the Euclidean plane is higher than the value of the first threshold of distance in the Euclidean plane. Advantageously, inconsistencies in neural network classification are thus avoided.

The method comprises the step of calculating a second distance in the Euclidean plane for each historical or current input vector that has been defined. This second distance is the distance in the Euclidean plane between each historical or current input vector and the closest weight vector.

Next, the method comprises the step of defining each historical or current input vector as properly classified if the corresponding second distance is smaller than or equal to the second threshold of distance in the Euclidean plane.

Conversely, the method comprises the step of defining each historical or current input vector as misclassified if the corresponding second distance is higher than the second threshold of distance in the Euclidean plane. Advantageously, it is therefore possible to reduce any neural network classification errors.

In accordance with the preferred embodiment of the invention, before the step of defining 7 by the control unit at least one historical input vector comprising the historical data of the first and second subsets of historical data, the method comprises the step of defining by the control unit a first time interval for the acquisition of historical data of the first historical data subset. This first acquisition time interval represents the time frame for acquiring historical data from the first historical data subset.

In addition, before the step of defining 7 by the control unit at least one historical input vector comprising the historical data of the first and second subsets of historical data, the method comprises the step of defining by the control unit a second time interval for the acquisition of historical data of the second historical data subset. This second acquisition time interval represents the time frame for acquiring historical data from the second historical data subset.

Furthermore, before the step of defining 7 by the control unit at least one historical input vector comprising the historical data of the first and second subsets of historical data, the method comprises the step of defining by the control unit the maximum acquisition time interval between the first and second acquisition time intervals.

Before the step of defining 7 by the control unit at least one historical input vector comprising the historical data of the first and second subsets of historical data, the method comprises the step of aggregating the data of the first and second subsets of historical data based on the maximum acquisition time interval to obtain aggregated historical data.

The step of aggregating the data of the first and second subsets of historical data based on the maximum acquisition time interval to obtain aggregated historical data comprises the sub-step of identifying by the control unit a plurality of time points in the predetermined time window. These time points are spaced apart by the value of the maximum acquisition time interval.

In addition, the step of aggregating the data of the first and second subsets of historical data based on the maximum acquisition time interval to obtain aggregated historical data comprises the sub-step of associating by the control unit each historical data of the first and second subsets of historical data with a respective time point to define aggregated historical data.

Preferably, before the step of defining 7 by the control unit at least one historical input vector, the method comprises the step of defining by the control unit a maximum time window value. Preferably, said maximum time window value is chosen based on the value of the maximum acquisition time interval. The maximum time window value is higher than the maximum acquisition time interval.

Following the step of defining by the control unit a maximum time window value, the method comprises the step of defining by the control unit a separation time window for each pair of consecutive aggregated historical data of the first and second subsets of historical data. This separation time window is included between the time points associated with the aggregated historical data of the consecutive aggregated historical data pair. That is, the method comprises the step of defining the value of the separation time window for aggregated historical data associated with consecutive time points. If the separation time window coincides with the maximum acquisition time interval, such separation time window does not contain any time point defined by the control unit. Conversely, if the separation time window is higher than the maximum acquisition time interval, said separation time window contains at least one time point having no aggregated historical data of the first or second subset of historical data associated therewith.

Thereafter, the method comprises the step of checking by the control unit for each separation time window defined if the duration of such separation time window is at least equal to or higher than the maximum time window value.

Next, the method comprises the step of defining by the control unit a reliable time window by excluding from the predetermined time window each separation time window whose duration is at least equal to or higher than the maximum time window value. That is, the reliable time window contains only the separation time windows whose duration is smaller than the maximum time window. Advantageously, the method allows to exclude from the predetermined time window the separation time windows considered unreliable. The method then allows to exclude from the predetermined time window the separation time windows comprising a plurality of time points having no aggregated historical data of the first or second subset of historical data associated therewith. The number of such plurality of time points having no aggregated historical data associated therewith is defined by the value of the maximum time window.

It should be noted that a reliable time window for each historical input vector that has been defined is defined in this manner.

In accordance with the preferred embodiment of the invention, following the step of defining a reliable time window, the method comprises the step of checking by the control unit if each separation time window of the reliable time window comprises one or more time points having no aggregated historical data of the first and/or second subsets of historical data associated therewith.

Subsequently, the method comprises the step of interpolating by the control unit the aggregated historical data of the first and/or second subsets of historical data to define first and/or second interpolated data to be associated with each time point of the reliable time window having no aggregated historical data of the first and/or second subsets of historical data associated therewith. For example, the interpolating step comprises the sub-step of defining for each time point of the reliable time window having no aggregated historical data of the first or second subset of historical data associated therewith the respective previous time point and the respective subsequent time point. Next, the interpolating step comprises the sub-step of defining the first interpolated data for each time point of the reliable time window having no aggregated historical data of the first subset of historical data associated therewith. This first interpolated data results from the interpolation of the aggregated historical data of the first subset associated with the respective previous time point and the aggregated historical data of the first subset associated with the respective subsequent time point. In addition, the interpolating step comprises the sub-step of defining the second interpolated data for each time point of the reliable time window having no aggregated historical data of the second subset of historical data associated therewith. This second interpolated data results from the interpolation of the aggregated historical data of the second subset associated with the respective previous time point and the aggregated historical data of the second subset associated with the respective subsequent time point.

In accordance with the preferred embodiment of the invention, before the step of defining 7 by the control unit at least one historical input vector, the method comprises the step of normalizing by the control unit the aggregated historical data of the first and second subsets of historical data. Preferably, the step of normalizing by the control unit the aggregated historical data of the first and second subsets of historical data comprises the step of applying a standardization technique or a minimum-to-maximum normalization technique to the historical data.

## Claims

1. A method of identifying and classifying the behavior modes of a plurality of data relative to a telephony infrastructure for Network Function Virtualization, said method comprising the steps of:
- providing (1) a first database containing historical telephony infrastructure monitoring data concerning the level of use of telephony infrastructure resources;
- providing (2) a second database containing historical telephony infrastructure application monitoring data concerning the level of use of the telephony infrastructure application;
- providing (3) a control unit in signal communication with the first and second databases;
- providing (4) a neural network of Self-Organizing Map type;
- extrapolating (5), by the control unit, at least one first subset of historical data from said historical telephony infrastructure monitoring data, said first subset of data being relative to a predetermined time window;
- extrapolating (6), by the control unit, at least one second subset of historical data from said historical application monitoring data, said second subset of historical data being relative to the predetermined time window;
- defining (7), by the control unit, at least one historical input vector comprising the historical data of the first and second subsets of historical data;
- training (8), by the control unit, the neural network to define a weight vector comprising a plurality of weight coefficients for each neuron of the neural network such that by providing the at least one historical input vector as an input to the neural network, the behavior mode of the historical data of the at least one historical input vector is obtained as an output, each weight vector representing a respective behavior mode;
- acquiring (9), by the control unit, a plurality of current telephony infrastructure monitoring data and current telephony infrastructure application monitoring data, said current data being acquired in real time and being relative to a current window;
- defining (10), by the control unit, at least one current input vector comprising the current acquired data;
- providing (11), by the control unit, the at least one current input vector at the input of the trained neural network to obtain, at the output, the neuron of the neural network that is most stimulated by the current input vector;
- analyzing (12) the weight vector associated with the neuron obtained in the previous step to define the behavior mode of the current data of the current input vector;
said method being **characterized in that** it comprises the additional steps of:
- defining a first threshold of distance in the Euclidean plane;
- calculating a plurality of first distances in the Euclidean plane for each weight vector identified in the previous steps, each first distance representing the distance in the Euclidean plane between each weight vector and a different weight vector among those identified in the previous steps;
- grouping all the weight vectors whose mutual distance is equal to or smaller than the value of the first threshold of distance in the Euclidean plane into a respective group of neurons having a respective common behavior mode.

2. A method as claimed in claim 1, wherein the historical telephony infrastructure monitoring data and the historical telephony infrastructure application monitoring data and the current telephony infrastructure monitoring data and current telephony infrastructure application monitoring data are numerical data.

3. A method as claimed in claim 1 or 2, comprising the additional steps of:
- defining a second threshold of distance in the Euclidean plane;
- calculating a second distance in the Euclidean plane for each historical or current input vector that has been defined, said second distance being the distance in the Euclidean plane between said historical or current input vector and the closest weight vector;
- defining each historical or current input vector as properly classified if the corresponding second distance is smaller than or equal to the second threshold of distance in the Euclidean plane;
- defining each historical or current input vector as misclassified if the corresponding second distance is greater than the second threshold of distance in the Euclidean plane.

4. A method as claimed in any of claims 1 to 3, wherein before the step of defining (7) by the control unit at least one historical input vector comprising the historical data of the first and second subsets of historical data, the method comprises the step of:
- defining, by the control unit, a first time interval for the acquisition of the historical data of the first subset of historical data;
- defining, by the control unit, a second time interval for acquisition of the historical data of the second subset of historical data;
- defining, by the control unit, the maximum acquisition time interval between the first and second acquisition time intervals;
- aggregating the data of the first and second subsets of historical data based on the maximum acquisition time interval, to obtain aggregated historical data.

5. A method as claimed in claim 4, wherein the step of aggregating the data of the first and second subsets of historical data, based on the maximum acquisition time interval to obtain aggregated historical data comprises the sub-steps of:
- identifying, by the control unit, a plurality of time points in the predetermined time window, said time points being spaced apart by the value of the maximum acquisition time interval;
- associating, by the control unit, each historical data of the first and second subsets of historical data with a respective time point to define aggregated historical data.

6. A method as claimed in claim 4 or 5, wherein before the step of defining (7), by the control unit, at least one historical input vector, said method comprises the steps of:
- defining, by the control unit, a maximum time window value;
- defining, by the control unit, for each pair of consecutive aggregated historical data of the first and second subsets of historical data, a separation time window, said separation time window being included between the time points associated with the aggregated historical data of the pair of consecutive aggregated historical data;
- checking, by the control unit, for each separation time window defined, if the duration of such separation time window is at least equal to or higher than the maximum time window value;
- defining, by the control unit, a reliable time window by excluding from the predetermined time window each separation time window whose duration is at least equal to or greater than the maximum time window value.

7. A method as claimed in claim 6, wherein before the step of defining (7), by the control unit, at least one historical input vector, said method comprises the steps of:
- checking, by the control unit, if each separation time window of the reliable time window comprises one or more time points having no aggregated historical data of the first and/or second subsets of historical data associated therewith;
- interpolating, by the control unit, the aggregated historical data of the first and/or second subsets of historical data to define first and/or second interpolated data to be associated with each time point of the reliable time window having no aggregated historical data of the first and/or second subsets of historical data associated therewith.

8. A method as claimed in any of claims 4 to 7, wherein before the step of defining (7), by the control unit, at least one historical input vector, said method comprises the step of:
- normalizing, by the control unit, the aggregated historical data of the first and second subset of historical data.

## Patentansprüche

1. Verfahren zum Identifizieren und Klassifizieren der Verhaltensmodi einer Vielzahl von Daten in Bezug auf eine Telefonieinfrastruktur zur Netzwerkfunktionsvirtualisierung, wobei das Verfahren die Schritte umfasst zum:
- Bereitstellen (1) einer ersten Datenbank, die historische Telefonieinfrastruktur-Überwachungsdaten in Bezug auf den Nutzungsgrad von Telefonieinfrastrukturressourcen enthält;
- Bereitstellen (2) einer zweiten Datenbank, die historische Telefonieinfrastrukturanwendungs-Überwachungsdaten in Bezug auf den Nutzungsgrad der Telefonieinfrastrukturanwendung enthält;
- Bereitstellen (3) einer Steuereinheit in Signalkommunikation mit der ersten und der zweiten Datenbank;
- Bereitstellen (4) eines neuronalen Netzwerks vom Self-Organizing-Map-Typ;
- Extrapolieren (5) durch die Steuereinheit, mindestens einer ersten Teilmenge historischer Daten aus den historischen Telefonieinfrastruktur-Überwachungsdaten der Telefonieinfrastruktur, wobei die erste Teilmenge von Daten ein vorbestimmtes Zeitfenster betrifft;
- Extrapolieren (6) durch die Steuereinheit mindestens einer zweiten Teilmenge historischer Daten aus den historischen Anwendungsüberwachungsdaten, wobei die zweite Teilmenge historischer Daten das vorbestimmte Zeitfenster betrifft;
- Definieren (7) durch die Steuereinheit mindestens eines historischen Eingabevektors, der die historischen Daten der ersten und zweiten Teilmenge historischer Daten umfasst;
- Trainieren (8) durch die Steuereinheit des neuronalen Netzwerks, um einen Gewichtungsvektor zu definieren, der eine Vielzahl von Gewichtungskoeffizienten für jedes Neuron des neuronalen Netzwerks umfasst, derart, dass durch Bereitstellen des mindestens einen historischen Eingabevektors als eine Eingabe in das neuronale Netzwerk der Verhaltensmodus der historischen Daten des mindestens einen historischen Eingabevektors als eine Ausgabe erhalten wird, wobei jeder Gewichtungsvektor einen jeweiligen Verhaltensmodus darstellt;
- Erheben (9) durch die Steuereinheit einer Vielzahl aktueller Telefonieinfrastruktur-Überwachungsdaten und aktueller Telefonieinfrastrukturanwendungs-Überwachungsdaten, wobei die aktuellen Daten in Echtzeit erhoben werden und das aktuelle Fenster betreffen;
- Definieren (10) durch die Steuereinheit mindestens eines aktuellen Eingabevektors, der die aktuellen erhobenen Daten umfasst;
- Bereitstellen (11) durch die Steuereinheit des mindestens einen aktuellen Eingabevektors an dem Eingang des trainierten neuronalen Netzwerks, um an dem Ausgang das Neuron des neuronalen Netzwerks, das von dem aktuellen Eingabevektor am stärksten stimuliert wird, zu erhalten;
- Analysieren (12) des Gewichtungsvektors, der mit dem Neuron assoziiert ist, der im vorhergehenden Schritt erhalten wurde, um den Verhaltensmodus der aktuellen Daten des aktuellen Eingabevektors zu definieren;
wobei das Verfahren **dadurch gekennzeichnet ist, dass** es die zusätzlichen Schritte umfasst zum
- Definieren eines ersten Abstandschwellenwerts in der euklidischen Ebene;
- Berechnen einer Vielzahl erster Abstände in der euklidischen Ebene für jeden Gewichtungsvektor, der in den vorhergehenden Schritten identifiziert wurde, wobei jeder erste Abstand den Abstand in der euklidischen Ebene zwischen jedem Gewichtungsvektor und einem anderen Gewichtungsvektor unter denen, die in den vorhergehenden Schritten identifiziert wurden, darstellt;
- Gruppieren aller Gewichtungsvektoren, deren gegenseitiger Abstand gleich oder kleiner als der Wert des ersten Abstandschwellenwerts in der euklidischen Ebene ist, in eine jeweilige Gruppe von Neuronen, die einen jeweiligen gemeinsamen Verhaltensmodus aufweist.

2. Verfahren nach Anspruch 1, wobei die historischen Telefonieinfrastruktur-Überwachungsdaten und die historischen Telefonieinfrastrukturanwendungs-Überwachungsdaten sowie die aktuellen Telefonieinfrastruktur-Überwachungsdaten und die aktuellen Telefonieinfrastrukturanwendungs-Überwachungsdaten numerische Daten sind.

3. Verfahren nach Anspruch 1 oder 2, das die zusätzlichen Schritte umfasst zum:
- Definieren eines zweiten Abstandschwellenwerts in der euklidischen Ebene;
- Berechnen eines zweiten Abstands in der euklidischen Ebene für jeden historischen oder aktuellen Eingabevektor, der definiert wurde, wobei der zweite Abstand der Abstand in der euklidischen Ebene zwischen dem historischen oder aktuellen Eingabevektor und dem nächstliegenden Gewichtungsvektor ist;
- Definieren jedes historischen oder aktuellen Eingabevektors als richtig klassifiziert, falls der entsprechende zweite Abstand kleiner oder gleich dem zweiten Abstandsschwellenwert in der euklidischen Ebene ist;
- Definieren jedes historischen oder aktuellen Eingabevektors als falsch klassifiziert, falls der entsprechende zweite Abstand größer als der zweite Abstandschwellenwert in der euklidischen Ebene ist.

4. Verfahren nach einem der Ansprüche 1 bis 3, wobei das Verfahren vor dem Schritt des Definierens (7) durch die Steuereinheit mindestens eines historischen Eingabevektors, der die historischen Daten der ersten und zweiten Teilmenge historischer Daten umfasst, den Schritt umfasst zum:
- Definieren eines ersten Zeitintervalls für die Erhebung der historischen Daten der ersten Teilmenge historischer Daten durch die Steuereinheit;
- Definieren eines zweiten Zeitintervalls für die Erhebung der historischen Daten der zweiten Teilmenge historischer Daten durch die Steuereinheit;
- Definieren des maximalen Erhebungszeitintervalls zwischen dem ersten und dem zweiten Erhebungszeitintervall durch die Steuereinheit;
- Aggregieren der Daten der ersten und der zweiten Teilmenge historischer Daten basierend auf dem maximalen Erhebungszeitintervall, um aggregierte historische Daten zu erhalten.

5. Verfahren nach Anspruch 4, wobei der Schritt des Aggregierens der Daten der ersten und der zweiten Teilmenge historischer Daten basierend auf dem maximalen Erhebungszeitintervalls zum
Erhalten aggregierter historischer Daten die Teilschritte umfasst zum:
- Identifizieren einer Vielzahl von Zeitpunkten in dem vorbestimmten Zeitfenster durch die Steuereinheit, wobei die Zeitpunkte von dem Wert des maximalen Erhebungszeitintervalls beabstandet sind;
- Assoziieren durch die Steuereinheit jedes historischen Datums der ersten und der zweiten Teilmenge historischer Daten mit einem jeweiligen Zeitpunkt, um aggregierte historische Daten zu definieren.

6. Verfahren nach Anspruch 4 oder 5, wobei das Verfahren vor dem Schritt des Definierens (7) mindestens eines historischen Eingabevektors durch die Steuereinheit die Schritte umfasst zum:
- Definieren eines maximalen Zeitfensterwerts durch die Steuereinheit;
- Definieren eines Trennungszeitfensters durch die Steuereinheit für jedes Paar aufeinanderfolgender aggregierter historischer Daten der ersten und der zweiten Teilmenge historischer Daten, wobei das Trennungszeitfenster zwischen den Zeitpunkten, die mit den aggregierten historischen Daten des Paars aufeinanderfolgender aggregierter historischer Daten assoziiert sind, enthalten ist;
- Überprüfen durch die Steuereinheit für jedes definierte Trennungszeitfenster, ob die Dauer eines derartigen Trennungszeitfensters mindestens gleich oder größer als der maximale Zeitfensterwert ist;
- Definieren durch die Steuereinheit eines zuverlässigen Zeitfensters durch Ausschließen jedes Trennungszeitfensters, dessen Dauer mindestens gleich oder größer als der maximale Zeitfensterwert ist, aus dem vorbestimmten Zeitfenster.

7. Verfahren nach Anspruch 6, wobei das Verfahren vor dem Schritt des Definierens (7) mindestens eines historischen Eingabevektors durch die Steuereinheit die folgenden Schritte umfasst zum:
- Überprüfen durch die Steuereinheit, ob jedes Trennungszeitfenster des zuverlässigen Zeitfensters einen oder mehrere Zeitpunkte umfasst, die keine aggregierten historischen Daten der
ersten und/oder der zweiten Teilmenge historischer Daten, die damit assoziiert sind, aufweisen;
- Interpolieren der aggregierten historischen Daten der ersten und/oder der zweiten Teilmenge historischer Daten durch die Steuereinheit, um erste und/oder zweite interpolierte Daten zu definieren, die mit jedem Zeitpunkt des zuverlässigen Zeitfensters assoziiert werden sollen, mit dem keine aggregierten historischen Daten der ersten und/oder der zweiten Teilmenge historischer Daten assoziiert sind.

8. Verfahren nach einem der Ansprüche 4 bis 7, wobei vor dem Schritt des Definierens (7) durch die Steuereinheit mindestens eines historischen Eingabevektors das Verfahren den Schritt des Normierens durch die Steuereinheit der aggregierten historischen Daten der ersten und der zweiten Teilmenge historischer Daten umfasst.

## Revendications

1. Procédé d'identification et de classification des modes de comportement d'une pluralité de données par rapport à une infrastructure de téléphonie pour la virtualisation de fonctions de réseau, ledit procédé comprenant les étapes consistant à :
- fournir (1) une première base de données contenant des données historiques de surveillance d'infrastructure de téléphonie concernant le niveau d'utilisation des ressources d'infrastructure de téléphonie ;
- fournir (2) une deuxième base de données contenant des données historiques de surveillance d'application d'infrastructure de téléphonie concernant le niveau d'utilisation de l'application d'infrastructure de téléphonie ;
- fournir (3) une unité de commande en communication de signal avec la première et la deuxième base de données ;
- fournir (4) un réseau de neurones de type carte auto-organisatrice ;
- extrapoler (5), par l'unité de commande, au moins un premier sous-ensemble de données historiques à partir desdites données historiques de surveillance d'infrastructure de téléphonie, ledit premier sous-ensemble de données étant par rapport à une fenêtre temporelle prédéterminée ;
- extrapoler (6), par l'unité de commande, au moins un deuxième sous-ensemble de données historiques à partir desdites données historiques de surveillance d'application, ledit deuxième sous-ensemble de données historiques étant par rapport à la fenêtre temporelle prédéterminée ;
- définir (7), par l'unité de commande, au moins un vecteur d'entrée historique comprenant les données historiques des premier et deuxième sous-ensembles de données historiques ;
- entraîner (8), par l'unité de commande, le réseau de neurones pour définir un vecteur de poids comprenant une pluralité de coefficients de poids pour chaque neurone du réseau de neurones de sorte qu'en fournissant l'au moins un vecteur d'entrée historique en tant qu'entrée au réseau de neurones, le mode de comportement des données historiques de l'au moins un vecteur d'entrée historique soit obtenu comme sortie, chaque vecteur de poids représentant un mode de comportement respectif ;
- acquérir (9), par l'unité de commande, une pluralité de données courantes de surveillance d'infrastructure de téléphonie et de données courantes de surveillance d'application d'infrastructure de téléphonie, lesdites données courantes étant acquises en temps réel et étant par rapport à une fenêtre courante ;
- définir (10), par l'unité de commande, au moins un vecteur d'entrée courant comprenant les données acquises courantes ;
- fournir (11), par l'unité de commande, ledit au moins un vecteur d'entrée courant à l'entrée du réseau de neurones entraîné pour obtenir, en sortie, le neurone du réseau de neurones qui est le plus stimulé par le vecteur d'entrée courant ;
- analyser (12) le vecteur de poids associé au neurone obtenu à l'étape précédente pour définir le mode de comportement des données courantes du vecteur d'entrée courant ;
le procédé étant **caractérisé en ce qu'**il comprend les étapes supplémentaires consistant à :
- définir un premier seuil de distance dans le plan euclidien ;
- calculer une pluralité de premières distances dans le plan euclidien pour chaque vecteur de poids identifié aux étapes précédentes, chaque première distance représentant la distance dans le plan euclidien entre chaque vecteur de poids et un vecteur de poids différent parmi ceux identifiés aux étapes précédentes ;
- regrouper tous les vecteurs de poids dont la distance mutuelle est égale ou inférieure à la valeur du premier seuil de distance dans le plan euclidien en un groupe respectif de neurones ayant un mode de comportement commun respectif.

2. Procédé selon la revendication 1, dans lequel les données historiques de surveillance d'infrastructure de téléphonie et les données historiques de surveillance d'application d'infrastructure de téléphonie et les données courantes de surveillance d'infrastructure de téléphonie et les données courantes de surveillance d'application d'infrastructure de téléphonie sont des données numériques.

3. Procédé selon l'une des revendications 1 ou 2, comprenant les étapes supplémentaires consistant à :
- définir un deuxième seuil de distance dans le plan euclidien ;
- calculer une deuxième distance dans le plan euclidien pour chaque vecteur d'entrée historique ou courant qui a été défini, ladite deuxième distance étant la distance dans le plan euclidien entre ledit vecteur d'entrée historique ou courant et le vecteur de poids le plus proche ;
- définir chaque vecteur d'entrée historique ou courant comme correctement classé si la deuxième distance correspondante est inférieure ou égale au deuxième seuil de distance dans le plan euclidien ;
- définir chaque vecteur d'entrée historique ou courant comme étant mal classé si la deuxième distance correspondante est supérieure au deuxième seuil de distance dans le plan euclidien.

4. Procédé selon l'une quelconque des revendications 1 à 3, dans lequel, avant l'étape consistant à définir (7) par l'unité de commande au moins un vecteur d'entrée historique comprenant les données historiques des premier et deuxième sous-ensembles de données historiques, le procédé comprend l'étape consistant à :
- définir, par l'unité de commande, un premier intervalle de temps pour l'acquisition des données historiques du premier sous-ensemble de données historiques;
- définir, par l'unité de commande, un deuxième intervalle de temps pour l'acquisition des données historiques du deuxième sous-ensemble de données historiques ;
- définir, par l'unité de commande, l'intervalle de temps d'acquisition maximal entre les premier et deuxième intervalles de temps d'acquisition ;
- agréger les données des premier et deuxième sous-ensembles de données historiques sur la base de l'intervalle de temps d'acquisition maximal, pour obtenir des données historiques agrégées.

5. Procédé selon la revendication 4, dans lequel l'étape consistant à agréger les données des premier et deuxième sous-ensembles de données historiques, sur la base de l'intervalle de temps d'acquisition maximum pour
obtenir des données historiques agrégées comprend les sous-étapes consistant à :
- identifier, par l'unité de commande, une pluralité de points temporels dans la fenêtre temporelle prédéterminée, lesdits points temporels étant espacés de la valeur de l'intervalle temporel d'acquisition maximal ;
- associer, par l'unité de commande, chaque donnée historique des premier et deuxième sous-ensembles de données historiques à un point temporel respectif pour définir des données historiques agrégées.

6. Procédé selon la revendication 4 ou 5, dans lequel, avant l'étape consistant à définir (7), par l'unité de commande, au moins un vecteur d'entrée historique, ledit procédé comprend les étapes consistant à :
- définir, par l'unité de commande, une valeur maximale de fenêtre temporelle ;
- définir, par l'unité de commande, pour chaque paire de données historiques agrégées consécutives des premier et deuxième sous-ensembles de données historiques, une fenêtre temporelle de séparation, ladite fenêtre temporelle de séparation étant comprise entre les points temporels associés aux données historiques agrégées de la paire de données historiques agrégées consécutives ;
- vérifier, par l'unité de commande, pour chaque fenêtre temporelle de séparation définie, si la durée de telle fenêtre temporelle de séparation est au moins égale ou supérieure à la valeur maximale de fenêtre temporelle ;
- définir, par l'unité de commande, une fenêtre temporelle fiable en excluant de la fenêtre temporelle prédéterminée chaque fenêtre temporelle de séparation dont la durée est au moins égale ou supérieure à la valeur maximale de fenêtre temporelle.

7. Procédé selon la revendication 6, dans lequel, avant l'étape consistant à définir (7), par l'unité de commande, au moins un vecteur d'entrée historique, ledit procédé comprend les étapes consistant à :
- vérifier, par l'unité de commande, si chaque fenêtre temporelle de séparation de la fenêtre temporelle fiable comprend un ou plusieurs points temporels n'ayant pas de données historiques agrégées des premier et/ou deuxième sous-ensembles de données historiques qui leur sont associés ;
- interpoler, par l'unité de commande, les données historiques agrégées des premier et/ou deuxième sous-ensembles de données historiques pour définir des premières et/ou deuxièmes données interpolées à associer à chaque point temporel de la fenêtre temporelle fiable n'ayant pas de données historiques agrégées des premier et/ou deuxième sous-ensembles de données historiques qui leur sont associés.

8. Procédé selon l'une quelconque des revendications 4 à 7, dans lequel, avant l'étape consistant à définir (7), par l'unité de commande, au moins un vecteur d'entrée historique, ledit procédé comprend l'étape de normalisation, par l'unité de commande, des données historiques agrégées des premier et deuxième sous-ensembles de données historiques.
